# EUROPEAN PATENT SPECIFICATION

(11) **EP 1 968 154 B1**
(45) Date of publication and mention of the grant of the patent: **13.04.2016**
(21) Application number: 05822713.3
(22) Date of filing: 27.12.2005
(51) Int. Cl.: H01M 10/54

(54) **APPARATUS AND METHOD FOR RECOVERING VALUABLE SUBSTANCE FROM LITHIUM RECHARGEABLE BATTERY**
VORRICHTUNG UND VERFAHREN ZUM WIEDERGEWINNEN WERTVOLLER SUBSTANZEN AUS WIEDERAUFLADBAREN LITHIUMBATTERIEN
APPAREIL ET PROCEDE DE RECUPERATION DE SUBSTANCE PRECIEUSE A PARTIR D' UNE PILE RECHARGEABLE AU LITHIUM

(43) Date of publication of application: 10.09.2008
(73) Proprietor: KAWASAKI JUKOGYO KABUSHIKI KAISHA, Kobe-shi, Hyogo-ken (JP)
(72) Inventor: KAKUTA, Toshiya, Nakano-ku, Tokyo 1640001 (JP); YAMAZAKI, Seiichiro, Chiba 2860004 (JP)
(74) Representative: Charlton, Peter John
(86) International application number: PCT/JP2005/023887
(87) International publication number: WO 2007/074513

(56) References cited:
- JP-A- 08 306 394
- JP-A- 2002 198 104
- JP-A- 2003 206 132
- JP-A- 2005 011 698
- US-A1- 2003 222 020
- US-A1- 2005 241 943
- US-B1- 6 447 669

## Description

### Technical Field

The present invention relates to a recovery method and a recovery apparatus for recovering valuable substances, especially, for example, lithium (U), cobalt (Co) and the like, from lithium secondary batteries.

### Background Art

For positive electrode materials of the lithium secondary batteries, oxides of lithium-containing transition metals are used, and in particular, composite materials of lithium cobaltate (LiCoO₂) and carbon (C) are used. These composite materials can be synthesized relatively easily. As other positive electrode materials of the lithium secondary batteries, LiNiO₂, LiCoₓNi(₁₋ₓ) O₂ (x = 1~0), LiMn₂O₄ and the like can be mentioned.

As described above, since the positive electrode materials of the lithium secondary batteries contain rare and valuable substances, such as cobalt compounds, lithium compounds and/or the like, respectively, it is desired to recover such valuable substances from used lithium secondary batteries. Namely, the recovered valuable substances can be recycled and used again, for example, as the electrode materials for the lithium secondary batteries.

In the past, recycling of the positive electrode materials generally employs a wet process, in order to recover the cobalt compounds and the like, through several steps of processing oxides.

For example, in the recovery method for recovering valuable metals from the used lithium secondary batteries, described in JP 10-158751 A, KOHO, the used lithium secondary batteries are first calcinated, and then reduced with carbon, so as to be brought into a state likely to be changed into metal condensate, such as cobalt metal powder particles, nickel metal powder partides or the like. Thereafter, the calcinated material is ground, screened, and separated into a part rich in the valuable metals and a part containing a lower content of the valuable metals. Subsequently, the condensate of the valuable metals is mixed with a calcium compound, and the resultant mixture is heated and melted at 1500°C or higher temperature, so as to cause aluminum components to be incorporated and removed into slag of the calcium compound. In this way, the valuable metals, such as cobalt, nickel and the like, can be recovered.

Alternatively, in the recovery method for the valuable substances, described in JP 10-287864 A, an eluate is separated after addition of mineral add, such as hydrochloric acid or sulfuric acid, or mixture of the mineral acid and aqueous hydrogen peroxide to active materials used for the positive electrode of the lithium secondary battery. Thereafter, the resultant eluate is extracted and separated into desired components by contacting it with a solvent containing a special metal extractant, such as bis(1,1,3,3-tetramethylbutyl)phosphinic acid compounds and the like, and a solvent phase of the so-obtained extract is then contacted with the mineral acid for back extraction and separation, thereby recovering the valuable metals.

As described above, the steps of processing oxides in the conventional recovery method for the valuable metals include multi-stage steps, such as acid dissolution, solvent extraction, precipitation, add treatment, heat treatment and the like, as such requiring relatively complex and large-sized processing equipment as well as a higher processing temperature and a longer processing time. Besides, in a burning and removing step of carbon as a pre-treatment step, a substantially great amount of energy must be required, and a relatively long time, e.g., about 2 hours, must be needed for the process.

Furthermore, in the conventional recovery method described above, it is quite difficult to effectively collect lithium that is one of the valuable metals. In addition, in the case of processing the electrode material in which other rare and valuable metal components are also contained, there is a need for employing separate processing methods respectively suitable for collecting such metal components.

To address such problems of the conventional recovery methods, JP 2005-11698 A, filed by applicants including the applicant of the present application as one of the co-applicants thereof, discloses a method and an apparatus for recycling the electrode materials of the lithium secondary batteries, in which a recycling process can be performed, with simpler steps and in a shorter time, as compared with the conventional methods. According to this recycling method and apparatus, the recovery or collection of lithium can be performed more appropriately than the conventional recovery methods in which such recovery was quite difficult.

Specifically, in the recycling method and apparatus described in JP 2005-11698 A, lithium cobaltate (LiCoO₂), the positive electrode material of the lithium secondary battery, is subjected to a reducing reaction in molten lithium chloride (LiCl) (or molten salt of lithium chloride) together with metal lithium (Li) (i.e., in a reducing reaction step). Consequently, lithium oxide (Li₂O) is produced, while cobalt oxide (CoO), cobalt (Co) and the like are precipitated and then separated. Thereafter, the lithium oxide (Li₂O) is electrolyzed in the molten lithium chloride, and metal lithium (Li) will be deposited onto and collected from a cathode. As described above, the recycling method and apparatus employ a Li-LiCl process as a main process thereof.

However, in the recycling method and apparatus described above, the valuable metals and compounds thereof, such as cobalt oxide, cobalt and the like, that are aimed to be collected, are first precipitated and separated in a reaction tank after subjected to the reducing reaction step, and then the separated materials must be collected from the tank still heated at a high temperature. Such a work for collecting the target materials under such a high temperature condition is considerably difficult and requires specially designed structure and equipment, thus causing the entire system to be significantly complicated and large-sized.

### DISCLOSURE OF THE INVENTION

The present invention was made in light of the problems of the related art as described above, and therefore it is an object of this invention to simplify the structure of the recovery apparatus and a working procedure of the recovery method for recovering the valuable substances from the lithium secondary batteries.

To achieve the above object, the recovery apparatus for recovering the valuable substances from the lithium secondary battery according to the present invention comprises: a reaction tank adapted for immersing an electrode material of the lithium secondary battery into a molten salt of lithium chloride containing a metal lithium so as to perform a reducing reaction of the electrode material with the metal lithium; a movable perforated processing vessel configured to contain the electrode material therein and to be immersed into the molten salt of lithium chloride in the reaction tank together with the electrode material contained therein, the movable perforated processing vessel including a vessel main body in which the electrode material is filled, wherein a plurality of through-holes, each adapted for communicating an internal space of the reaction tank storing the molten salt of lithium chloride therein with an internal space of the vessel main body containing the electrode material therein, are formed in a vessel wall constituting the vessel main body; and vessel carrying means adapted for immersing the perforated processing vessel containing the electrode material therein into the molten salt of lithium chloride in the reaction tank and for pulling up the perforated processing vessel from the molten salt of lithium chloride in the reaction tank after a process has been performed, wherein the vessel main body has a thickness of the internal space in which the electrode material is filled, the thickness being set approximately twice or less than twice a distance that the molten salt of lithium chloride can permeate into the electrode material filled in the vessel main body.

Preferably, the thickness of the internal space of the vessel main body is within a range of approximately 60mm or less.

Preferably, the vessel main body is configured to have the internal space which has a rectangular structure having a rectangular horizontal cross section.

Preferably, the vessel main body is configured to have the internal space which has a doughnut-like structure having an annular horizontal cross section.

Preferably, the through-hole has a diameter of approximately 1mm.

Preferably,the recovery apparatus further comprises a guide tube having a passage formed therein, the passage being used when the perforated processing vessel is immersed into the molten salt of lithium chloride in the reaction tank by the vessel carrying means, the guide tube having a lower end located below a liquid surface of the molten salt of lithium chloride stored in the reaction tank.

Preferably, the vessel wall of the vessel main body is formed from a mesh material or punching metal.

Preferably, the recovery apparatus further comprises electro-deposition means for electrolyzing a lithium oxide produced in the molten salt of lithium chloride in the reaction tank so as to deposit the metal lithium onto a cathode.

Preferably, the recovery apparatus further comprises a lithium electro-deposition tank disposed separately from the reaction tank, the electro-deposition means being located in the lithium electro-deposition tank.

Preferably, the recovery apparatus further comprises a discharging passage including a discharging port located just above a liquid surface of the molten salt of lithium chloride in order to collect the metal lithium accumulated on the liquid surface of the molten salt of lithium chloride in the lithium electro-deposition tank.

Preferably, an anode and the cathode of the electro-deposition means are immersed in the molten salt of lithium chloride in the reaction tank.

Preferably, a partition member is disposed in the reaction tank, the partition member being adapted for shielding the metal lithium floating on a liquid surface of the molten salt of lithium chloride in the reaction tank from the anode of the electro-deposition means.

Preferably, the recovery apparatus further comprises a discharging passage including a discharging port located just above the liquid surface of the molten salt of lithium chloride in order to collect the metal lithium accumulated on the liquid surface of the molten salt of lithium chloride in the reaction tank.

Preferably, the recovery apparatus further comprises a water tank configured such that the perforated processing vessel is immersed into water in order to remove an extraneous material after the perforated processing vessel has been pulled up from the molten salt of lithium chloride in the reaction tank.

To achieve the above object, the recovery method for recovering the valuable substances from the lithium secondary battery according to the present invention comprises: an immersing step of immersing a movable perforated processing vessel, which includes a vessel main body in which an electrode material of the lithium secondary battery is filled, into a molten salt of lithium chloride which is stored in a reaction tank and contains a metal lithium, wherein a plurality of through-holes, each adapted for communicating an internal space of the reaction tank storing the molten salt of lithium chloride therein with an internal space of the vessel main body containing the electrode material therein, are formed in a vessel wall constituting the vessel main body; a reducing reaction step of performing a reducing reaction of the electrode material with the metal lithium in the reaction tank, wherein the molten salt of lithium chloride, in which the metal lithium as a reducing agent and a lithium oxide as a reaction product are dissolved, flows through the plurality of through-holes of the vessel main body; and a pulling up step of pulling up the perforated processing vessel from the molten salt of lithium chloride in the reaction tank after the reducing reaction step has been performed, wherein the vessel main body has a thickness of the internal space in which the electrode material is filled, the thickness being set approximately twice or less than twice a distance that the molten salt of lithium chloride can permeate into the electrode material filled in the vessel main body, wherein in the reducing reaction step, the molten salt of lithium chloride can permeate into substantially the entire electrode material filled in the vessel main body.

Preferably, in the immersing step and the pulling up step, the perforated processing vessel is immersed into and pulled up from the molten salt of lithium chloride in the reaction tank through an interior of a guide tube, the guide tube having a lower end located below a liquid surface of the molten salt of lithium chloride stored in the reaction tank.

Preferably, the recovery method further comprises a preparation step of supplying the molten salt of lithium chloride and the metal lithium into the reaction tank prior to the immersing step, wherein the molten salt of lithium chloride is first supplied into the reaction tank until a liquid surface thereof reaches a level above the lower end of the guide tube, and the metal lithium is then supplied onto the liquid surface of the molten salt of lithium chloride in the reaction tank outside of the guide tube.

Preferably, the recovery method further comprises an electro-deposition step of electrolyzing a lithium oxide produced in the molten salt of lithium chloride in the reaction tank in the reducing reaction step, so as to deposit the metal lithium onto a cathode.

Preferably, the electro-deposition step is carried out by using a pair of electrodes located in a lithium electro-deposition tank which is disposed separately from the reaction tank.

Preferably, the electro-deposition step is carried out by using a pair of electrodes disposed in the reaction tank.

Preferably, the metal lithium deposited on the cathode and then floating to and accumulated on a liquid surface of the molten salt of lithium chloride is discharged through a discharging passage including a discharging port located just above the liquid surface of the molten salt of lithium chloride.

Preferably, the recovery method further comprises a water washing step of immersing the perforated processing vessel into water so as to remove an extraneous material after the perforated processing vessel has been pulled up from the molten salt of lithium chloride in the reaction tank by the pulling up step.

Preferably, the recovery method further comprises a filling step of filling and compressing the electrode material of a powdery state into the vessel main body prior to the immersing step.

Preferably, in the reducing reaction step, once the metal lithium is consumed by the reducing reaction with the electrode material, the metal lithium floating on a liquid surface of the molten salt of lithium chloride stored in the reaction tank will be dissolved and supplied into the molten salt of lithium chloride, so as to keep a chemical equilibrium.

Thus, according to the present invention comprising features as described above, significant simplification of the structure of the recovery apparatus and the working procedure of the recovery method for recovering the valuable substances from the lithium secondary batteries can be achieved.

### BRIEF DESCRIPTION OF THE DRAWINGS

Fig. 1 is a block diagram illustrating construction of the recovery apparatus for recovering the valuable substances from the lithium secondary battery according to an embodiment of the present invention.
Fig. 2 is a diagram enlarging and showing a key portion of the recovery apparatus for the valuable substances shown in Fig. 1.
Fig. 3A is a side view enlarging and showing a portion of a perforated basket assembly shown in Fig. 2.
Fig. 3B is a front view enlarging and showing the portion of the perforated basket assembly shown in Fig. 2.
Fig. 4 is a diagram enlarging and showing a basket unit constituting the perforated basket assembly shown in Figs. 3A and 3B, in which Fig. 4(a) is a side view, Fig. 4(b) is a front view, Fig. 4(c) is a top view, and Fig. 4(d) is a bottom view.
Fig. 5 is a diagram enlarging and showing parts constituting together the basket unit shown in Fig. 4, in which Fig. 5(a) is a side view, Fig. 5(b) is a front view, Fig. 5(c) is a top view, and Fig. 5(d) is a bottom view.
Fig. 6 is a flow chart showing the recovery method for recovering the valuable substances from the lithium secondary battery according to an embodiment of the present invention.
Fig. 7A is a diagram illustrating an aspect of putting the perforated basket assembly into a reducing reaction tank of the valuable-substance recovery apparatus shown in Fig. 1.
Fig. 7B is a diagram illustrating a state in which the perforated basket assembly is loaded in the reducing reaction tank of the valuable-substance recovery apparatus shown in Fig. 1.
Fig. 7C is a diagram illustrating an aspect of pulling up the perforated basket assembly from the reducing reaction tank of the valuable-substance recovery apparatus shown in Fig. 1.
Fig. 8A is a diagram illustrating an aspect of supplying a molten salt of lithium chloride into the reducing reaction tank of the valuable-substance recovery apparatus shown in Fig. 1.
Fig. 8B is a diagram illustrating a state in which the molten salt of lithium chloride is filled up to a predetermined level in the reducing reaction tank of the valuable-substance recovery apparatus shown in Fig. 1.
Fig. 8C is a diagram illustrating a state in which metal lithium is supplied onto a liquid surface of the molten salt of lithium chloride filled in the reducing reaction tank of the valuable-substance recovery apparatus shown in Fig. 1.
Fig. 9A is a side view showing a preferred example of the perforated basket of the valuable-substance recovery apparatus shown in Fig. 1.
Fig. 9B is a front view of the perforated basket shown in Fig. 9A.
Fig. 10A is a perspective view showing another example of the perforated basket of the valuable-substance recovery apparatus shown in Fig. 1.
Fig. 10B is a top view of the perforated basket shown in Fig. 10A.
Fig. 10C is a bottom view of the perforated basket shown in Fig. 10A.
Fig. 11 is a diagram illustrating the recovery apparatus of a single-tank type as a variation of the valuable-substance recovery apparatus shown in Fig. 1.

### BEST MODE FOR CARRYING OUT THE INVENTION

Hereinafter, an embodiment of the recovery method and the recovery apparatus for recovering the valuable substances from the lithium secondary battery according to the present invention will be described with reference to the accompanying drawings.

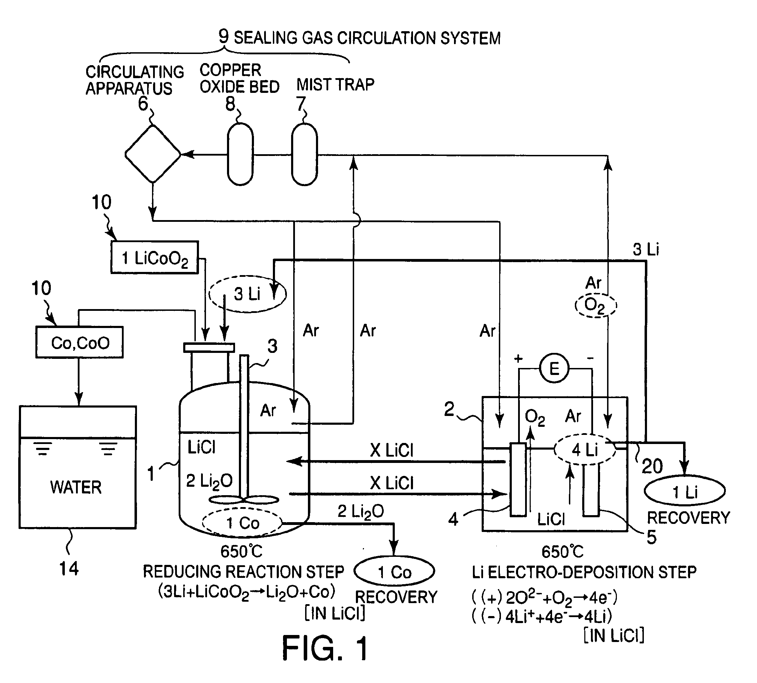

As shown in Fig. 1, the valuable-substance recovery apparatus according to this embodiment includes a reducing reaction tank 1 and a lithium electro-deposition tank 2.

The reducing reaction tank 1 is configured to perform a reducing reaction between lithium cobaltate (LiCoO₂), which is one example of the electrode material of the lithium secondary battery, and metal lithium (Li), by immersing the lithium cobaltate in molten lithium chloride (LiCl) or molten salt of lithium chloride (LiCl), which contains the metal lithium (Li). In the reducing reaction tank 1, a stirrer 3 is provided for stirring a liquid in the tank. Since a reducing agent (i.e., U) and a reduction product (Li₂O) can be dissolved in the molten lithium chloride (LiCl), the reducing reaction can be performed homogenously and stably.

The lithium electro-deposition tank 2 is configured to electrolyze lithium oxide produced in the molten lithium chloride in the reducing reaction tank 1 and deposit metal lithium onto a cathode. In the lithium electro-deposition tank 2, an anode 4 and the cathode 5 are provided for electrolyzing the lithium oxide in the molten lithium chloride, such that the metal lithium can be deposited onto the cathode 5 due to electrolysis. The metal lithium deposited on the cathode 5 then floats to the surface of the molten lithium chloride, and is accumulated on the liquid surface of the molten lithium chloride.

Since metal lithium reacts with oxygen and nitrogen in the air, the atmosphere of a gaseous phase in each of the reducing reaction tank 1 and lithium electro-deposition tank 2 should be sealed with an inert gas, such as argon gas. The sealing gas is utilized by circulation with a circulating apparatus 6. To the circulation apparatus 6, a mist trap 7 adapted to remove mist of the molten salt carried with the sealing gas and a copper oxide bed 8 adapted to remove oxygen gas generated in the lithium electro-deposition tank 2 are connected, respectively. The circulating apparatus 6, mist trap 7 and copper oxide bed 8 constitute together a sealing gas circulation system 9.

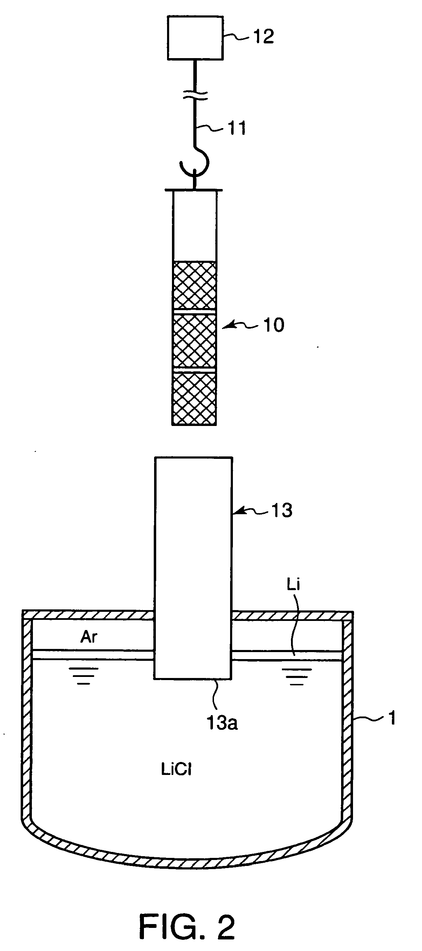

In addition, as shown in Fig. 2, the valuable-substance recovery apparatus according to this embodiment includes a movable perforated basket assembly 10 (or perforated processing vessel). The movable perforated basket assembly 10 is configured to contain the lithium cobaltate (LiCoO₂), i.e., the electrode material of the lithium secondary battery, therein, as well as configured to be immersed into the molten lithium chloride (LiCl) in the reducing reaction tank 1 together with the lithium cobaltate.

The perforated basket assembly 10 is carried by a crane 12 (or vessel carrying means) including a hooking mechanism 11. Namely, the crane 12 is configured to immerse the perforated basket assembly 10 containing unprocessed lithium cobaltate therein into the molten lithium chloride in the reducing reaction tank 1 as well as configured to pull up the perforated basket assembly 10 from the molten lithium chloride in the reducing reaction tank 1 after a predetermined process is performed. At this time, an object to be recovered, which is a reaction product (i.e. cobalt, cobalt oxide and the like), remains in the perforated basket assembly 10 as a mass.

In the reducing reaction tank 1, a guide tube 13 is provided, which has a passage formed therein, such that the perforated basket assembly 10 can be immersed into the molten salt of lithium chloride with the crane 12 through the passage. The guide tube 13 is designed to have a lower end 13a located below the liquid surface of the molten lithium chloride (LiCl) stored in the reducing reaction tank 1.

Additionally, as shown in Fig. 1, the valuable-substance recovery apparatus according to this embodiment includes a water tank 14. Namely, the perforated basket assembly 10 pulled up from the molten lithium chloride in the reducing reaction tank 1 with the crane 12 will be immersed into wafer in the water tank 14 after processed for a predetermined time, so as to wash extraneous matter, such as lithium chloride (LiCl) or the like.

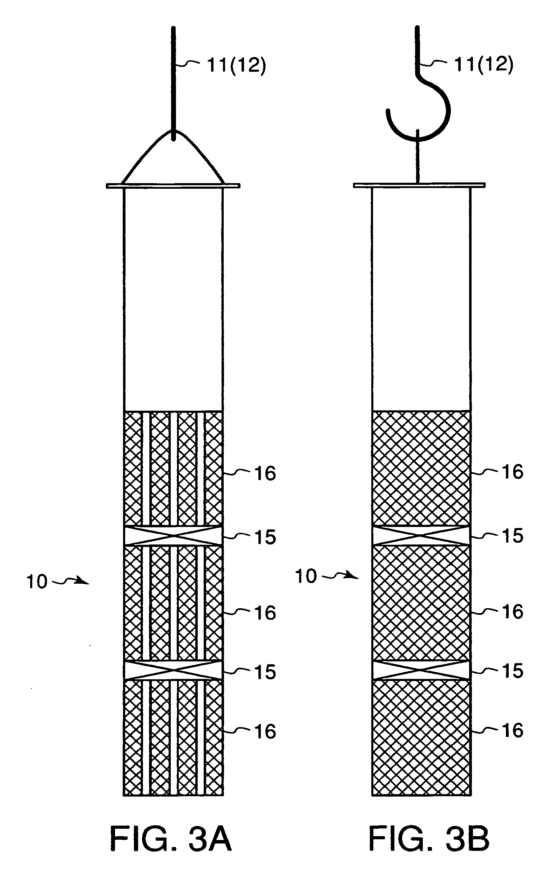

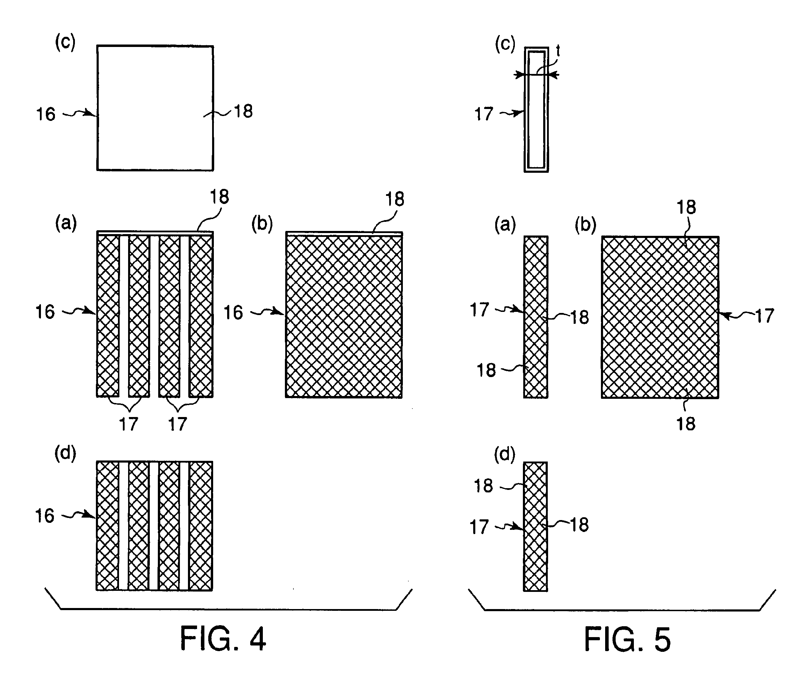

As shown in Figs. 3A and 3B, the perforated basket assembly 10 is composed of three basket units 16 mutually connected in the vertical direction via spacers 15. Each basket unit 16, as shown in Fig. 4, is constructed with four perforated baskets (or vessel main bodies) 17 connected with one another via a cover plate 18. It should be appreciated that the number (three in this embodiment) of the basket units 16 constituting the perforated basket assembly 10 and the number (four in this embodiment) of perforated baskets 17 constituting each basket unit 16 may be changed optionally, depending on a desired amount to be processed.

Each basket 17 constitutes a vessel in which the lithium cobaltate is filled, and a vessel wall of the basket 17 is formed from a mesh material having a plurality of through-holes 18 formed therein. Other than using the mesh material, the vessel wall of each perforated basket 17 may be formed from, for example, a punching metal. In addition, the vessel wall of the perforated basket 17 can be formed from a material excellent in heat resistance and corrosion resistance, and preferably it is formed from a stainless material (SUS316).

The particle size of powder of the lithium cobaltate (LioCO₂) filled in each perforated basket 17 is approximately several ten microns. However, it has been found from our experiment that compressed powdery particles of lithium cobaltate will not fall down from a screen if each opening thereof is sized about 1mm. Accordingly, it is preferred to set the diameter of each through-hole 18 of the vessel wall of each perforated basket 17 at about 1mm.

As described above, since the plurality of through-holes 18 are formed over the entire vessel wall of each perforated basket 17, once the perforated basket assembly 10 is loaded in the reducing reaction tank 1, an internal space of the reducing reaction tank 1 storing the molten lithium chloride therein and an internal space of each perforated basket 17 containing the lithium cobaltate therein are in communication with each other, throughout the entire vessel wall, via the plurality of through-holes.

As shown in Fig. 5, each perforated basket 17 has a rectangular structure including an outer shape and an inner space respectively having a rectangular horizontal cross section. A thickness t of the internal space of each perforated basket 17, in which the lithium cobaltate is filled, is set approximately twice or less than twice a distance that the molten lithium chloride can permeate into the filled lithium cobaltate. Preferably, the thickness t of the internal space of each perforated basket 17 is set within a range of approximately 60mm or less.

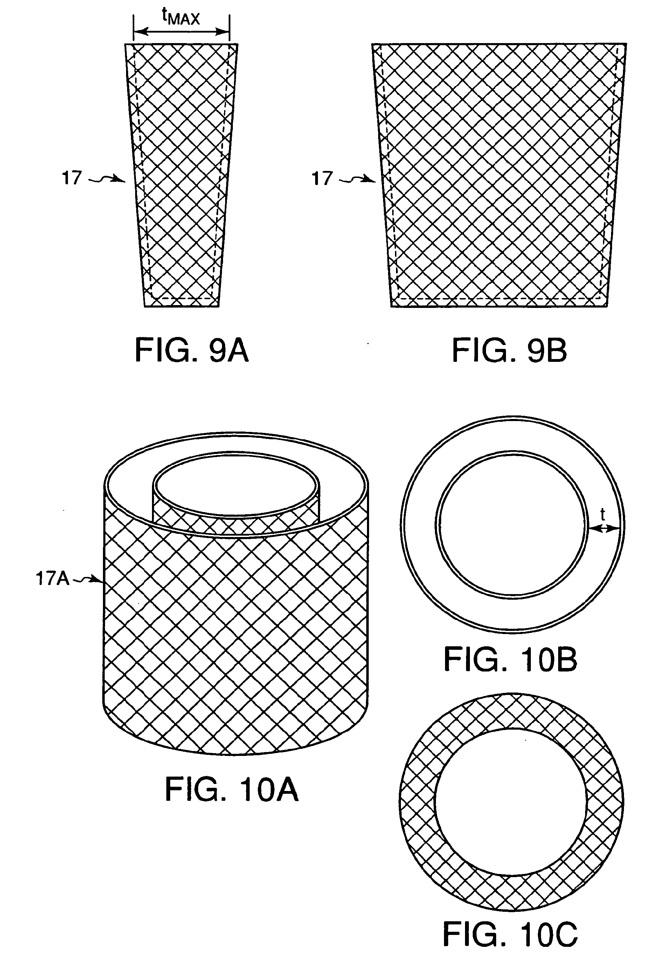

Each perforate basket 17, preferably, has a tapered shape, which spreads wider toward its top end, as shown in Figs. 9A and 9B. In the perforated basket 17 of such a tapered shape, the thickness of the top end of the internal space of the perforated basket 17, i.e., the greatest thickness t_{MAX} of a portion that has the largest horizontal cross section (Fig. 9A) is set approximately twice or less than twice the distance that the molten lithium chloride can permeate into the filled lithium cobaltate.

With such a tapered shape, the mass of the object to be recovered (i.e., cobalt, cobalt oxide and the like) remaining in each perforated basket 17 after the predetermined process can be readily taken out from the perforate basket 17.

As a variation of the perforated basket, a perforated basket 17A having a doughnut-like structure with an internal space of an annular horizontal cross section, as shown in Figs. 10A, 10B and 10C, may also be employed.

In the perforated basket 17 having such a doughnut-like structure, the thickness t measured between an inner circumferential wall having a smaller diameter and an inner circumferential wall having a greater diameter, defining together an annular internal space, is set approximately twice or less than twice the distance that the molten lithium chloride can permeate into the filled lithium cobaltate.

Next, the valuable-substance recovery method for recovering the valuable substances from used lithium secondary batteries by using the valuable-substance recovery apparatus according to the present invention will be described.

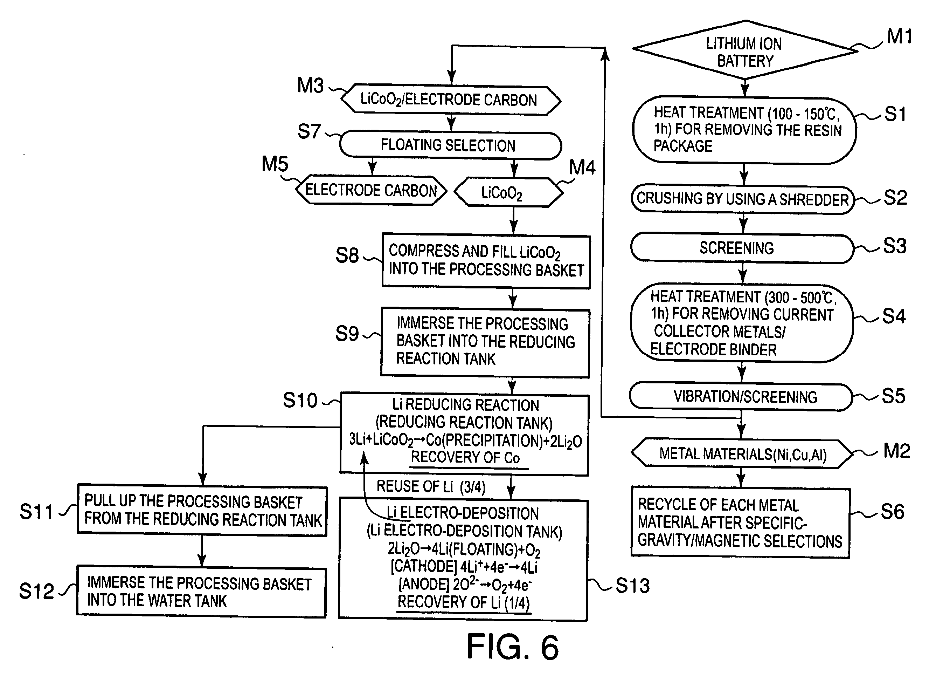

As shown in Fig. 6, in a preparation step, lithium ion batteries M1 corrected in advance are first heated at a relatively low temperature of from 100°C to 150°C for about 1 hour in order to remove resin packages therefrom (S1), and the remaining batteries are then crushed by using a shredder (S2) and screened, so as to select materials sufficiently broken into fine pieces (S3).

The so-selected materials are further heated at a relatively high temperature of from 300°C to 500°C for about 1 hour in order to separate and remove current collector metals and an electrode binder (S4), and the remaining materials are then subjected to vibration screening (S5), so as to separate a mixture M3 of the lithium cobaltate (LiCoO₂) and electrode carbon (C) from metallic materials M2, such as nickel, copper, aluminum and the like.

The metallic materials M2 are separated and collected for each element through gravity concentration, magnetic selection and the like, in order to effectively recycle them for each metal (S6).

On the other hand, the mixture M3 of the lithium cobaltate and carbon is separated into the lithium cobaltate M4 and the electrode carbon M5 by floating selection (S7).

The separated lithium cobaltate (LiCoO₂) M4 is the object to be processed in the valuable-substance recovery method of this embodiment, and is further separated into the metal lithium (Li) and cobalt (Co), so as to be utilized as the electrode material or the like.

More specifically, the separated and recovered powder of lithium cobaltate (LiCoO₂) is compressed and filled in each perforated basket 17 of the perforated basket assembly 10 (Filling step S8).

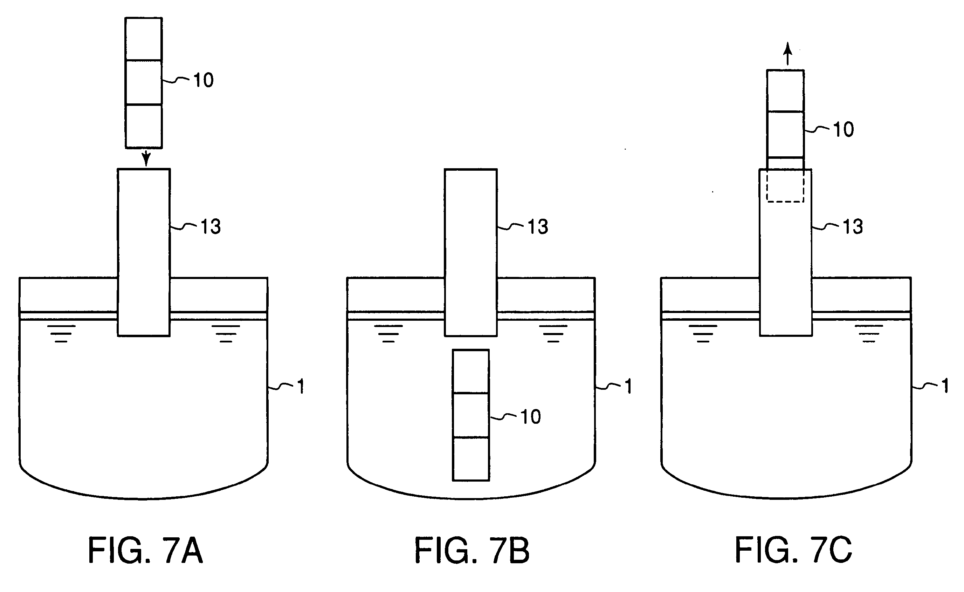

Subsequently, as shown in Fig. 7A, the perforated basket assembly 10 composed of the plurality of perforated baskets 17 filled with lithium cobaltate is loaded into the reducing reaction tank 1 with the crane 12 through the guide tube 13 (Immersing step S9). In this case, lithium chloride in the reducing reaction tank 1 is heated up to a temperature slightly higher than its melting point of 610°C so as to be kept in a melted state.

Once the perforated basket assembly 10 is loaded in the reducing reaction tank 1 as shown in Fig. 7B, the molten salt of lithium chloride (LiCl), in which the reducing agent Li is melted, in the reducing reaction tank 1 flows into each perforated basket 17 via the through-holes 18 because these multiple through-holes 18 are formed in the vessel wall of each perforated basket 17 as described above. In this way, the molten lithium chloride can permeate into the lithium cobaltate.

At this time, because the thickness t of the internal space of each perforated basket 17 is set approximately twice or less than twice the distance that the molten lithium chloride can permeate into the filled lithium cobaltate, the molten lithium chloride can permeate throughout the filled lithium cobaltate.

Consequently, the reducing reaction throughout the lithium cobaltate in the perforated baskets 17 with the metal lithium can occur in the reducing reaction tank 1 (Reducing reaction step S10). In the reducing reaction step S10, the molten lithium chloride (LiCl), in which the metal lithium (Li), i.e., the reducing agent and the lithium oxide (Li₂O), i.e., the reaction product, are dissolved together, flows through the plurality of through-holes 18 of each perforated basket 17.

Although, in a conventional pre-treatment, the carbon in the composite material has been burned and removed by heating the material up to a temperature higher than 1100°C, the carbon can also be oxidized by directly immersing the crushed electrode materials into the molten salt and bubbling oxgen or air therethrough, as an alternative pre-treatment, in the recovery method according to this embodiment.

If the lithium cobaltate and electrode carbon (C) cannot be separated sufficiently, or if the floating selection (S7) is omitted, oxygen (O₂) may be blown into the reducing reaction tank 1 and reacted with the material, with stirring by the stirrer 3, as the pre-treatment, after the lithium cobaltate is charged into the reducing reaction tank 1. The pressure in the internal space of the tank 1 may be an atmospheric pressure. Alternatively, the gas to be blown into the tank 1 may be a mixed gas of oxygen and an inert gas, such as argon (Ar), nitrogen (N₂) or the like, while the air may be directly used.

Thereafter, carbonic acid gas and oxygen gas are carried out together with the sealing gas, and the reducing reaction tank 1 is heated up to a temperature of approximately 650°C higher than the melting point, while being sealed with the inert gas. Then, the metal lithium (Li) is added into the tank 1 so as to perform the reducing reaction with stirring.

In the case in which the carbon is burned in the reducing reaction tank 1 as the pre-treatment, it is preferred that the pre-treated carbon is removed by providing a carbon dioxide gas adsorbent into the sealing gas circulation system 9. Alternatively, the pre-treated carbon may be removed by solidifying it by using a cold trap.

The lithium reducing reaction step (S10) shown in Fig. 6 produces cobalt (Co) and lithium oxide (Li₂O), based on the following chemical reaction, in which three equivalents of metal lithium (Li) is added to one equivalent of lithium cobaltate (LiCoO₂).

LiCoO₂ + 3Li → Co + 2Li₂O (1)

In the lithium reducing reaction step (S10), while the metal lithium floats on the liquid surface of the molten lithium chloride, it is dissolved therein about 0.1 wt% at 650°C. Therefore, the lithium dissolved and consumed in the chemical reaction described above can be supplied directly from the metal lithium floating on the liquid surface of the molten salt, such that the supply of the metal lithium will keep a chemical equilibrium. Thus, this chemical reaction can automatically continue until the lithium cobaltate or metal lithium will disappear completely.

The cobalt (Co) produced due to the above reducing reaction is not likely to be dissolved in the molten lithium chloride (LiCl), and the lithium cobaltate filled in each perforated basket 17 will substantially keep its original shape even after the reducing reaction (that is an exothermic reaction) occurs over its entire body. On the other hand, the lithium oxide can be dissolved, about 8.8 wt% at 650°C, in the molten lithium chloride. Therefore, the lithium oxide dissolved in the molten lithium chloride can be readily separated from the cobalt remaining in each perforated basket 17.

The amount of lithium cobaltate that can be processed by one batch is restricted by the amount of the lithium oxide that can be dissolved, and is determined depending both on the amount of the molten lithium chloride and on the solubility of the lithium oxide.

Once the predetermined reducing reaction step (S10) is completed, the perforated basket assembly 10 is pulled up from the reducing reaction tank 1 together with an object to be recovered (cobalt components) that is remaining in the assembly 10, as shown in Fig. 7C, by using the crane 12 (Pulling up step S11).

Subsequently, by further using the crane 12 continuously, the perforated basket assembly 10 is immersed into the water tank 14 shown in Fig. 1 in order to remove the extraneous matter therefrom (Washing step S12). In this case, since the cobalt components to be recovered are pulled up from the reducing reaction tank 1 together with the perforated basket assembly 10, the molten lithium chloride (LiCl) will be associated with the perforated basket assembly 10.

In addition, carbon components and a remaining binder (i.e., a fluororesin) that could not be removed completely in the burning step may produce LiC (C + Li → LiC) and LiF (F + Li → UF), respectively, due to a reaction with the metal lithium (Li) in the reducing reaction tank 1. Therefore, by washing the perforated basket assembly 10 with water in the water tank 14 in a water-washing step (S12), the lithium chloride (LiCl) can be dissolved and removed into the water, LiC will produce acetylene due to reaction with the water and thus it can be removed (LiC + H₂O → 0.5C₂H₂ + LiOH), and LiF can also be dissolved and removed into the water.

Upon utilizing the cobalt components recovered from the above process as a raw material for the electrode material, it is more advantageous, in some cases, to recover or collect the component in a form of the cobalt oxide. In such a case, the cobalt oxide can be obtained together with lithium oxide, based on the following reducing reaction, in which one equivalent of metal lithium is added to one equivalent of lithium cobaltate.

LiCoO₂ + Li → CoO + Li₂O (2)

In this case, the cobalt oxide is not dissolved in the molten salt of lithium chloride, as such remaining in the perforated baskets 17.

Once the lithium oxide produced by the reducing reaction in the reducing reaction tank 1 is substantially saturated in the lithium chloride, the molten lithium chloride in which the lithium oxide is dissolved will be transferred into the lithium electro-deposition tank 2, so as to perform a lithium electro-deposition step (S13).

In the lithium electro-deposition tank 2, the anode 4 and the cathode 5 are inserted, and a direct current power source is connected across the two electrodes 4, 5. With such configuration, the molten lithium chloride, in which the lithium oxide produced in the reducing reaction tank 1 is incorporated, is transferred into the lithium electro-deposition tank 2, and the two electrodes 4, 5 are then immersed into the molten salt, respectively. Subsequently, a potential difference of from 2.47V to 3.46V is applied between both of the electrodes 4. 5. As a result, electrolysis of the lithium oxide occurs, as such metal lithium is deposited on the cathode 5 while oxygen gas is generated around the anode 4.

Thereafter, the metal lithium deposited on the cathode 5 floats to the liquid surface of the molten salt and accumulated in a melted state thereon. Such floating metal lithium can be recovered by flowing or drawing it out of the lithium electro-deposition tank 2, via a discharging pipe (or discharging passage) 20 connected with the lithium electro-deposition tank 2 in a position just above the liquid surface of the molten salt in the lithum electro-deposition tank 2.

Meanwhile, the generated oxygen gas will float to the surface of the molten salt and then be carried out together with the sealing gas.

When the voltage used for the electrolysis is 2.47V or higher, the lithium oxide can be decomposed into the metal lithium and the oxygen gas, while if the voltage exceeds 3.46V, the lithium chloride is also decomposed, resulting in generation of chlorine gas. Therefore, by adjusting the electrolyzing voltage within the range of from about 2.47V to 3.46V, the lithium oxide can be selectively decomposed while the undesirable generation of chlorine gas can be restricted.

Thereafter, in the case of supplying the produced lithium as the lithium to be used for the reducing reaction, approximately 3/4 of the produced lithium is returned from the lithium electro-deposition tank 2 into the reducing reaction tank 1, while the remaining 1/4 thereof is taken out and collected.

Since efficiency of the electrolysis of lithium will be degraded when the concentration of the lithium oxide dissolved in the molten lithium chloride becomes substantially low, it should be ended when the concentration reaches an appropriate level. The remaining molten salt is then returned into the reducing reaction tank 1, and the lithium cobaltate as the raw material is again added thereto together with the metal lithium, so as to repeat the procedure from the reducing reaction step.

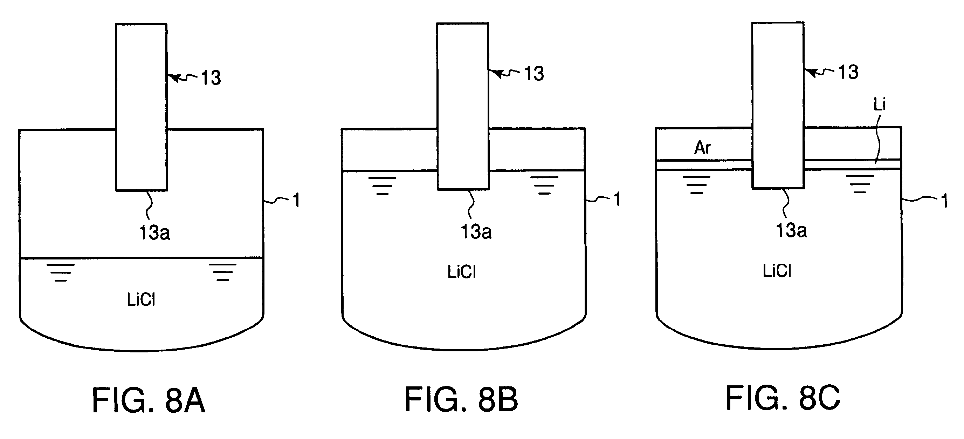

Next, a procedure for supplying the molten lithium chloride (LiCl), i.e., the reaction solvent, and the metal lithium (Li), i.e., the reducing agent, into the reducing reaction tank 1 (i.e., the preparation step) will be described, with reference to Figs. 8A to 8C.

Prior to the immersing step (S9) described above and shown in Fig. 6, only the molten salt of lithium chloride is first supplied into the reducing reaction tank 1 as shown in Fig. 8A, and the supply of the molten salt is then stopped when the liquid surface thereof reaches a proper point above the lower end 13a of the guide tube 13. Thereafter, the metal lithium as the reducing agent is supplied from the outside of the guide tube 13 onto the liquid surface of the molten lithium chloride in the reducing reaction tank 1.

Thus, the metal lithium floating on the liquid surface of the molten lithium chloride will never enter the guide tube 13. Accordingly, association of the metal lithium with the perforated basket assembly 10 can be prevented, upon pulling up the processed perforated basket assembly 10 from the reducing reaction tank 1 as shown in Fig. 7C. This is significantly effective for preventing contact of the metal lithium rich in reactivity with the air.

As described above, according to the recovery method and recovery apparatus of this embodiment, the object to be processed containing the lithium cobaltate can be handled continuously by using the same perforated basket assembly 10, through all of the steps, including the charge of the object into the reducing reaction tank 1, reducing reaction, and recovering of the object from the reducing reaction tank 1. Therefore, substantial simplification and compactification of the structure of the valuable-substance recovery apparatus can be achieved, as well as the working time required for recovering the valuable substances can be significantly reduced.

Additionally, according to the recovery method and recovery apparatus of this embodiment, lithium, whose recovery was conventionally quite difficult, can be securely recovered, in addition to the successful recovery of cobalt.

Due to the dry process using the molten lithium chloride, the process can be simplified and the reducing reaction can be performed uniformly and stably. Additionally, handling of wastewater and other wastes can be facilitate.

Generally, the waste is only the oxygen gas generated from the lithium electro-deposition tank 2. On the other hand, in the conventional wet process, many kinds of wastes, such as wastewater, ion exchange resins, organic solvents and the like, are associated. Accordingly, the processing method of the present embodiment is more advantageous because of association of fewer kinds and amounts of the waste.

Since a basic system of this embodiment can be completed with the two steps, i.e., the reducing reaction and the electrolysis, the apparatus can be significantly simplified and compactified, as compared with a case of requiring a multistage cascade process of the related art.

Moreover, in the wet process, a means for controlling the amount to be processed and/or a means for cooling the system should be provided in order to prevent boiling of water that is a solvent used for the reducing reaction. In this embodiment, however, since the heat capacity of the molten salt is substantially greater while the reaction rate is relatively low, the heat of the reducing reaction can be absorbed adequately, thus enabling a large-scale process.

In this way, according to this embodiment, the electrode material of the lithium secondary battery can be recovered by the dry process, and the process can be performed with simpler steps and in a shorter handling time. Accordingly, besides the advantage of using the aforementioned perforated basket assembly 10, the apparatus can be significantly compactified and the cost for operation can be reduced. Additionally, the amounts of the wastewater and other wastes can be significantly reduced.

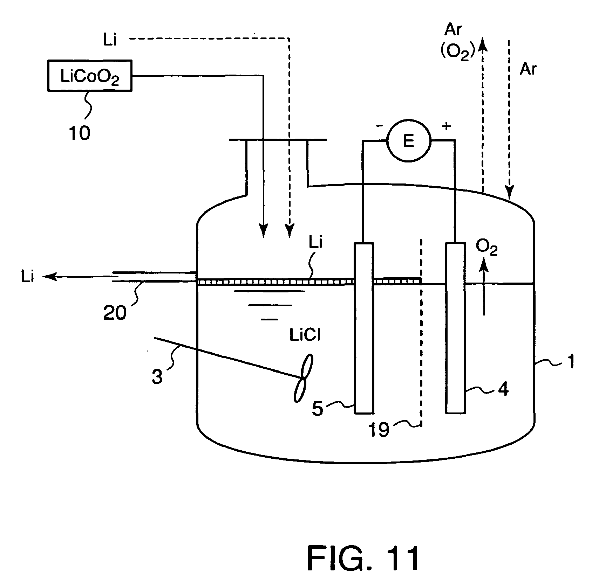

As a variation of the embodiment described above, the Li electro-deposition tank and the reducing reaction tank 1 may be used commonly as a single-tank type system, as shown in Fig. 11, in which the electrolyzing electrodes 4, 5 are incorporated in the reducing reaction tank 1,

In this example, a partition member 19 is provided in the reaction tank 1. The partition member 19 is configured to shield the metal lithium floating on the liquid surface of the molten lithium chloride in the reaction tank 1 from the anode 4 of the electro-deposition means.

Additionally, the discharging pipe 20 adapted for discharging the metal lithium floating on the liquid surface of the molten lithium chloride out of the reaction tank is connected with the reaction tank 1 in a position just above the liquid surface of the molten lithium chloride.

As with the case of this variation, when the reducing reaction tank 1 and the Li electro-deposition tank 1 are provided to be used commonly, a structure for transporting the molten lithium chloride from the reducing reaction tank 1 into the Li electro-deposition tank 2 and the Li electro-deposition tank 2 itself can be omitted. Furthermore, undesirable lowering of the temperature of the molten salt during the transportation can be avoided, as such loss of energy for keeping the temperature of the molten salt can be eliminated.

Since the metal lithium produced in the electro-deposition process can be directly utilized for the reducing reaction, there is no need to provide a separate apparatus for distributing a predetermined amount of the metal lithium into the reducing reaction tank 1 after drawing out it as is similar to the case in which the two tanks are separated.

In the embodiment described above, while the case in which the material of the positive electrode in the lithium secondary battery is lithium cobaltate (LiCoO₂) has been discussed, the recovery method and recovery apparatus for the valuable substances according to the present invention can also be applied to other materials of the positive electrode than lithium cobaltate, for example, UNiO₂, LiCoₓNi₍₁₋ₓ₎O₂ (x = 1~0), LiMn₂O₄ and the like. The chemical reactions in the case of using these materials as the positive electrode material are expressed as follows.

When LiNiO₂ is used as the electrode material;
LiNiO₂ + 3Li → 2Li₂O + Ni, or
LiNiO₂ + Li → Li₂O + NiO.
Alternatively, when LiCoₓNi₍₁₋ₓ₎O₂ is used as the electrode material;
LiCoxNi₍₁₋ₓ₎O₂ + 3Li → 2Li₂O + COₓNi₍₁₋ₓ₎, or
LiCoₓNi₍₁₋ₓ₎O₂ + Li → Li₂O + COₓNi₍₁₋ₓ₎O.
Alternatively, when LiMn₂O₄ is used as the electrode material;
LiMn₂O₄ + 7Li → 4Li₂O + 2Mn, or
LiMn₂O₄ + 3Li → 2Li₂O + 2MnO.

While preferred examples of the present invention have been shown and described specifically to some extent, it is obvious that various modifications can be made thereto. Accordingly, it should be understood that the present invention can be implemented in various aspects other than those specifically shown and described herein, without departing from the scope of the claimed invention.

## Claims

1. A recovery apparatus for recovering a valuable substance from a lithium secondary battery, comprising:
a reaction tank adapted for immersing an electrode material of the lithium secondary battery into a molten salt of lithium chloride containing a metal lithium so as to perform a reducing reaction of the electrode material with the metal lithium;
a movable perforated processing vessel configured to contain the electrode material therein and to be immersed into the molten salt of lithium chloride in the reaction tank together with the electrode material contained therein, the movable perforated processing vessel including a vessel main body in which the electrode material is filled, wherein a plurality of through-holes, each adapted for communicating an internal space of the reaction tank storing the molten salt of lithium chloride therein with an internal space of the vessel main body containing the electrode material therein, are formed in a vessel wall constituting the vessel main body; and
vessel carrying means adapted for immersing the perforated processing vessel containing the electrode material therein into the molten salt of lithium chloride in the reaction tank and for pulling up the perforated processing vessel from the molten salt of lithium chloride in the reaction tank after a process has been performed,
wherein the vessel main body has a thickness of the internal space in which the electrode material is filled, the thickness being set approximately twice or less than twice a distance that the molten salt of lithium chloride can permeate into the electrode material filled in the vessel main body.

2. The recovery apparatus for recovering the valuable substance from the lithium secondary battery according to claim 1, wherein the thickness of the internal space of the vessel main body is within a range of approximately 60mm or less.

3. The recovery apparatus for recovering the valuable substance from the lithium secondary battery according to claim 1 or 2, wherein the vessel main body is configured to have the internal space which has a rectangular structure having a rectangular horizontal cross section.

4. The recovery apparatus for recovering the valuable substance from the lithium secondary battery according to claim 1 or 2, wherein the vessel main body is configured to have the internal space which has a doughnut-like structure having an annular horizontal cross section.

5. The recovery apparatus for recovering the valuable substance from the lithium secondary battery according to any one of claims 1 to 4, wherein the through-hole has a diameter of approximately 1 mm.

6. The recovery apparatus for recovering the valuable substance from the lithium secondary battery according to any one of claims 1 to 5, further comprising a guide tube having a passage formed therein, the passage being used when the perforated processing vessel is immersed into the molten salt of lithium chloride in the reaction tank by the vessel carrying means, the guide tube having a lower end located below a liquid surface of the molten salt of lithium chloride stored in the reaction tank.

7. The recovery apparatus for recovering the valuable substance from the lithium secondary battery according to any one of claims 1 to 6, wherein the vessel wall of the vessel main body is formed from a mesh material or punching metal.

8. The recovery apparatus for recovering the valuable substance from the lithium secondary battery according to any one of claims 1 to 7, further comprising electro-deposition means for electrolyzing a lithium oxide produced in the molten salt of lithium chloride in the reaction tank so as to deposit the metal lithium onto a cathode.

9. The recovery apparatus for recovering the valuable substance from the lithium secondary battery according to claim 8, further comprising a lithium electro-deposition tank disposed separately from the reaction tank, the electro-deposition means being located in the lithium electro-deposition tank.

10. The recovery apparatus for recovering the valuable substance from the lithium secondary battery according to claim 9, further comprising a discharging passage including a discharging port located just above a liquid surface of the molten salt of lithium chloride in order to collect the metal lithium accumulated on the liquid surface of the molten salt of lithium chloride in the lithium electro-deposition tank.

11. The recovery apparatus for recovering the valuable substance from the lithium secondary battery according to claim 8, wherein an anode and the cathode of the electro-deposition means are immersed in the molten salt of lithium chloride in the reaction tank.

12. The recovery apparatus for recovering the valuable substance from the lithium secondary battery according to claim 11, wherein a partition member is disposed in the reaction tank, the partition member being adapted for shielding the metal lithium floating on a liquid surface of the molten salt of lithium chloride in the reaction tank from the anode of the electro-deposition means.

13. The recovery apparatus for recovering the valuable substance from the lithium secondary battery according to claim 12, further comprising a discharging passage including a discharging port located just above the liquid surface of the molten salt of lithium chloride in order to collect the metal lithium accumulated on the liquid surface of the molten salt of lithium chloride in the reaction tank.

14. The recovery apparatus for recovering the valuable substance from the lithium secondary battery according to any one of claims 1 to 13, further comprising a water tank configured such that the perforated processing vessel is immersed into water in order to remove an extraneous material after the perforated processing vessel has been pulled up from the molten salt of lithium chloride in the reaction tank.

15. A recovery method of recovering a valuable substance from a lithium secondary battery, comprising:
an immersing step of immersing a movable perforated processing vessel, which includes a vessel main body in which an electrode material of the lithium secondary battery is filled, into a molten salt of lithium chloride which is stored in a reaction tank and contains a metal lithium, wherein a plurality of through-holes, each adapted for communicating an internal space of the reaction tank storing the molten salt of lithium chloride therein with an internal space of the vessel main body containing the electrode material therein, are formed in a vessel wall constituting the vessel main body;
a reducing reaction step of performing a reducing reaction of the electrode material with the metal lithium in the reaction tank, wherein the molten salt of lithium chloride, in which the metal lithium as a reducing agent and a lithium oxide as a reaction product are dissolved, flows through the plurality of through-holes of the vessel main body; and
a pulling up step of pulling up the perforated processing vessel from the molten salt of lithium chloride in the reaction tank after the reducing reaction step has been performed,
wherein the vessel main body has a thickness of the internal space in which the electrode material is filled, the thickness being set approximately twice or less than twice a distance that the molten salt of lithium chloride can permeate into the electrode material filled in the vessel main body, and
wherein, in the reducing reaction step, the molten salt of lithium chloride can permeate into substantially the entire electrode material filled in the vessel main body.

16. The recovery method of recovering the valuable substance from the lithium secondary battery according to claim 15, wherein, in the immersing step and the pulling up step, the perforated processing vessel is immersed into and pulled up from the molten salt of lithium chloride in the reaction tank through an interior of a guide tube, the guide tube having a lower end located below a liquid surface of the molten salt of lithium chloride stored in the reaction tank.

17. The recovery method of recovering the valuable substance from the lithium secondary battery according to claim 16, further comprising a preparation step of supplying the molten salt of lithium chloride and the metal lithium into the reaction tank prior to the immersing step, wherein the molten salt of lithium chloride is first supplied into the reaction tank until a liquid surface thereof reaches a level above the lower end of the guide tube, and the metal lithium is then supplied onto the liquid surface of the molten salt of lithium chloride in the reaction tank outside of the guide tube.

18. The recovery method of recovering the valuable substance from the lithium secondary battery according to any one of claims 15 to 17, further comprising an electro-deposition step of electrolyzing a lithium oxide produced in the molten salt of lithium chloride in the reaction tank in the reducing reaction step, so as to deposit the metal lithium onto a cathode.

19. The recovery method of recovering the valuable substance from the lithium secondary battery according to claim 18, wherein the electro-deposition step is carried out by using a pair of electrodes located in a lithium electro-deposition tank which is disposed separately from the reaction tank.

20. The recovery method of recovering the valuable substance from the lithium secondary battery according to claim 18, wherein the electro-deposition step is carried out by using a pair of electrodes disposed in the reaction tank.

21. The recovery method of recovering the valuable substance from the lithium secondary battery according to any one of claims 18 to 20,
wherein the metal lithium deposited on the cathode and then floating to and accumulated on a liquid surface of the molten salt of lithium chloride is discharged through a discharging passage including a discharging port located just above the liquid surface of the molten salt of lithium chloride.

22. The recovery method of recovering the valuable substance from the lithium secondary battery according to any one of claims 15 to 21, further comprising a water washing step of immersing the perforated processing vessel into water so as to remove an extraneous material after the perforated processing vessel has been pulled up from the molten salt of lithium chloride in the reaction tank by the pulling up step.

23. The recovery method of recovering the valuable substance from the lithium secondary battery according to any one of claims 15 to 22, further comprising a filling step of filling and compressing the electrode material of a powdery state into the vessel main body prior to the immersing step.

24. The recovery method of recovering the valuable substance from the lithium secondary battery according to any one of claims 15 to 23, wherein, in the reducing reaction step, once the metal lithium is consumed by the reducing reaction with the electrode material, the metal lithium floating on a liquid surface of the molten salt of lithium chloride stored in the reaction tank will be dissolved and supplied into the molten salt of lithium chloride, so as to keep a chemical equilibrium.

## Patentansprüche

1. Wiedergewinnungsvorrichtung zum Wiedergewinnen einer wertvollen Substanz aus einer Lithium-Sekundärbatterie, aufweisend:
einen Reaktionsbehälter, der ausgebildet ist, um ein Elektrodenmaterial der Lithium-Sekundärbatterie in ein geschmolzenes Lithiumchloridsalz einzutauchen, das metallisches Lithium enthält, so dass eine Reduktionsreaktion des Elektrodenmaterials mit dem metallischen Lithium durchgeführt wird;
ein bewegliches perforiertes Aufbereitungsgefäß, das konfiguriert ist, um das Elektrodenmaterial aufzunehmen und in das geschmolzene Lithiumchloridsalz im Reaktionsbehälter zusammen mit dem in ihm enthaltenen Elektrodenmaterial eingetaucht zu werden, wobei das bewegliche perforierte Aufbereitungsgefäß einen Gefäßhauptkörper beinhaltet, in den das Elektrodenmaterial eingefüllt wird, wobei eine Mehrzahl von Durchgangslöchern, die jeweils ausgebildet sind, um eine Verbindung eines Innenraums des Reaktionsbehälters, der das geschmolzene Lithiumchloridsalz aufnimmt, zu einem das Elektrodenmaterial aufnehmenden Innenraum des Gefäßhauptkörpers herzustellen, in einer Gefäßwand ausgebildet sind, die den Gefäßhauptkörper bildet; und
eine Gefäßtrageinrichtung, die ausgebildet ist, um das perforierte Aufbereitungsgefäß, welches das Elektrodenmaterial enthält, in das geschmolzene Lithiumchloridsalz im Reaktionsbehälter einzutauchen und das perforierte Aufbereitungsgefäß aus dem geschmolzenen Lithiumchloridsalz im Reaktionsbehälter hochzuziehen, nachdem eine Aufbereitung durchgeführt wurde,
wobei der Gefäßhauptkörper eine Dicke des Innenraums aufweist, in den das Elektrodenmaterial eingefüllt wird, wobei die Dicke auf ungefähr das Doppelte oder weniger als das Doppelte einer Distanz festgelegt ist, die das geschmolzene Lithiumchloridsalz in das in den Gefäßhauptkörper eingefüllte Elektrodenmaterial eindringen kann.

2. Wiedergewinnungsvorrichtung zum Wiedergewinnen der wertvollen Substanz aus der Lithium-Sekundärbatterie nach Anspruch 1, wobei die Dicke des Innenraums des Gefäßhauptkörpers in einem Bereich von ungefähr 60 mm oder weniger liegt.

3. Wiedergewinnungsvorrichtung zum Wiedergewinnen der wertvollen Substanz aus der Lithium-Sekundärbatterie nach Anspruch 1 oder 2, wobei der Gefäßhauptkörper so konfiguriert ist, dass er einen Innenraum aufweist, der eine rechteckige Struktur mit einem rechteckigen Horizontalquerschnitt aufweist.

4. Wiedergewinnungsvorrichtung zum Wiedergewinnen der wertvollen Substanz aus der Lithium-Sekundärbatterie nach Anspruch 1 oder 2, wobei der Gefäßhauptkörper so konfiguriert ist, dass er einen Innenraum hat, der eine kreisringartige Struktur mit ringförmigem Horizontalquerschnitt hat.

5. Wiedergewinnungsvorrichtung zum Wiedergewinnen der wertvollen Substanz aus der Lithium-Sekundärbatterie nach einem der Ansprüche 1 bis 4, wobei das Durchgangsloch einen Durchmesser von ungefähr 1 mm hat.

6. Wiedergewinnungsvorrichtung zum Wiedergewinnen der wertvollen Substanz aus der Lithium-Sekundärbatterie nach einem der Ansprüche 1 bis 5, die weiter ein Führungsrohr aufweist, in dem ein Durchlass ausgebildet ist, wobei der Durchlass verwendet wird, wenn das perforierte Aufbereitungsgefäß in das geschmolzene Lithiumchloridsalz im Reaktionsbehälter mittels der Gefäßtrageinrichtung eingetaucht wird, wobei sich das untere Ende des Führungsrohrs unterhalb einer Flüssigkeitsoberfläche des geschmolzenen Lithiumchloridsalz befindet, das im Reaktionsbehälter aufbewahrt wird.

7. Wiedergewinnungsvorrichtung zum Wiedergewinnen der wertvollen Substanz aus der Lithium-Sekundärbatterie nach einem der Ansprüche 1 bis 6, wobei die Gefäßwand des Gefäßhauptkörpers aus einem Netzmaterial oder einem gestanzten Material ausgebildet ist.

8. Wiedergewinnungsvorrichtung zum Wiedergewinnen der wertvollen Substanz aus der Lithium-Sekundärbatterie nach einem der Ansprüche 1 bis 7, die weiter eine Elektroabscheidungseinrichtung aufweist, welche eine Elektrolyse von Lithiumoxid durchführt, das in dem geschmolzenen Lithiumchloridsalz im Reaktionsbehälter erzeugt wird, so dass das metallische Lithium auf einer Kathode abgeschieden wird.

9. Wiedergewinnungsvorrichtung zum Wiedergewinnen der wertvollen Substanz aus der Lithium-Sekundärbatterie nach Anspruch 8, die weiter einen Lithium-Elektroabscheidungsbehälter aufweist, der separat vom Reaktionsbehälter angeordnet ist, wobei die Elektroabscheidungseinrichtung sich im Lithium-Elektroabscheidungsbehälter befindet.

10. Wiedergewinnungsvorrichtung zum Wiedergewinnen der wertvollen Substanz aus der Lithium-Sekundärbatterie nach Anspruch 9, die weiter einen Abführdurchlass aufweist, der eine Abführöffnung beinhaltet, die sich knapp oberhalb einer Flüssigkeitsoberfläche des geschmolzenen Lithiumchloridsalzes befindet, um das metallische Lithium zu sammeln, das sich auf der Flüssigkeitsoberfläche des geschmolzenen Lithiumchloridsalzes im Lithium-Elektroabscheidungsbehälter angesammelt hat.

11. Wiedergewinnungsvorrichtung zum Wiedergewinnen der wertvollen Substanz aus der Lithium-Sekundärbatterie nach Anspruch 8, wobei eine Anode und die Kathode der Elektroabscheidungseinrichtung in das geschmolzene Lithiumchloridsalz im Reaktionsbehälter eingetaucht sind.

12. Wiedergewinnungsvorrichtung zum Wiedergewinnen der wertvollen Substanz aus der Lithium-Sekundärbatterie nach Anspruch 11, wobei ein Unterteilungselement im Reaktionsbehälter angeordnet ist, wobei das Unterteilungselement ausgebildet ist, um das metallische Lithium, das auf einer Flüssigkeitsoberfläche des geschmolzenen Lithiumchloridsalzes im Reaktionsbehälter schwimmt, von der Anode der Elektroabscheidungseinrichtung abzuschirmen.

13. Wiedergewinnungsvorrichtung zum Wiedergewinnen der wertvollen Substanz aus der Lithium-Sekundärbatterie nach Anspruch 12, die weiter einen Abführdurchlass aufweist, der eine Abführöffnung beinhaltet, die sich knapp oberhalb der Flüssigkeitsoberfläche des geschmolzenen Lithiumchloridsalzes befindet, um das metallische Lithium zu sammeln, das sich auf der Flüssigkeitsoberfläche des geschmolzenen Lithiumchloridsalzes im Reaktionsbehälter angesammelt hat.

14. Wiedergewinnungsvorrichtung zum Wiedergewinnen der wertvollen Substanz aus der Lithium-Sekundärbatterie nach einem der Ansprüche 1 bis 13, die weiter einen Wasserbehälter aufweist, der derart konfiguriert ist, dass das perforierte Aufbereitungsgefäß in Wasser eingetaucht wird, um ein Fremdmaterial zu entfernen, nachdem das perforierte Aufbereitungsgefäß aus dem geschmolzenen Lithiumchloridsalz im Reaktionsbehälter hochgezogen wurde.

15. Wiedergewinnungsverfahren zum Wiedergewinnen einer wertvollen Substanz aus einer Lithium-Sekundärbatterie, umfassend:
einen Eintauchschritt, bei dem ein bewegliches perforiertes Aufbereitungsgefäß, das einen Gefäßhauptkörper beinhaltet, in den ein Elektrodenmaterial der Lithium-Sekundärbatterie eingefüllt ist, in ein geschmolzenes Lithiumchloridsalz eingetaucht wird, das in einem Reaktionsbehälter aufbewahrt wird und metallisches Lithium enthält, wobei eine Mehrzahl von Durchgangslöchern, die jeweils ausgebildet sind, um eine Verbindung eines Innenraums des Reaktionsbehälters, der das geschmolzene Lithiumchloridsalz aufnimmt, zu einem das Elektrodenmaterial aufnehmenden Innenraum des Gefäßhauptkörpers herzustellen, in einer Gefäßwand ausgebildet sind, die den Gefäßhauptkörper bildet;
einen Reduktionsreaktionsschritt, bei dem eine Reduktionsreaktion des Elektrodenmaterials mit dem metallischen Lithium im Reaktionsbehälter durchgeführt wird, wobei das geschmolzene Lithiumchloridsalz, in dem das metallische Lithium als Reduktionsmittel und ein Lithiumoxid als Reaktionsprodukt gelöst sind, durch die Mehrzahl von Durchgangslöchern des Gefäßhauptkörpers strömt; und
einen Hochziehschritt, bei dem das perforierte Aufbereitungsgefäß aus dem geschmolzenen Lithiumchloridsalz im Reaktionsbehälter hochgezogen wird, nach dem der Reduktionsreaktionsschritt durchgeführt wurde,
wobei der Gefäßhauptkörper eine Dicke des Innenraums aufweist, in den das Elektrodenmaterial eingefüllt wird, wobei die Dicke auf ungefähr das Doppelte oder weniger als das Doppelte einer Distanz festgelegt ist, die das geschmolzene Lithiumchloridsalz in das in den Gefäßhauptkörper eingefüllte Elektrodenmaterial eindringen kann, und
wobei bei dem Reduktionsreaktionsschritt das geschmolzene Lithiumchloridsalz in im Wesentlichen das gesamte Elektrodenmaterial eindringen kann, das in den Gefäßhauptkörper eingefüllt ist.

16. Wiedergewinnungsverfahren zum Wiedergewinnen der wertvollen Substanz aus der Lithium-Sekundärbatterie nach Anspruch 15, wobei bei dem Eintauchschritt und dem Hochziehschritt das perforierte Aufbereitungsgefäß in das geschmolzene Lithiumchloridsalz im Reaktionsbehälter durch einen Innenraum eines Führungsrohrs eingetaucht und hochgezogen wird, wobei das untere Ende des Führungsrohrs sich unterhalb einer Flüssigkeitsoberfläche des geschmolzenen Lithiumchloridsalzes befindet, das im Reaktionsbehälter aufbewahrt wird.

17. Wiedergewinnungsverfahren zum Wiedergewinnen der wertvollen Substanz aus der Lithium-Sekundärbatterie nach Anspruch 16, das weiter einen Vorbereitungsschritt aufweist, bei dem das geschmolzene Lithiumchloridsalz und das metallische Lithium in den Reaktionsbehälter vor dem Eintauchschritt zugeführt werden, wobei das geschmolzene Lithiumchloridsalz als Erstes in den Reaktionsbehälter zugeführt wird, bis seine Flüssigkeitsoberfläche ein Niveau oberhalb des unteren Endes des Führungsrohrs erreicht, und dann metallisches Lithium auf die Flüssigkeitsoberfläche des geschmolzenen Lithiumchloridsalzes im Reaktionsbehälter außerhalb des Führungsrohrs zugeführt wird.

18. Wiedergewinnungsverfahren zum Wiedergewinnen der wertvollen Substanz aus der Lithium-Sekundärbatterie nach einem der Ansprüche 15 bis 17, das weiter einen Elektroabscheidungsschritt umfasst, bei dem eine Elektrolyse von Lithiumoxid durchgeführt wird, das in dem geschmolzenen Lithiumchloridsalz im Reaktionsbehälter beim Reduktionsreaktionsschritt erzeugt wird, so dass das metallische Lithium auf einer Kathode abgeschieden wird.

19. Wiedergewinnungsverfahren zum Wiedergewinnen der wertvollen Substanz aus der Lithium-Sekundärbatterie nach Anspruch 18, wobei der Elektroabscheidungsschritt unter Verwendung eines Paars von Elektroden ausgeführt wird, die sich in einem Lithium-Elektroabscheidungsbehälter befinden, der separat vom Reaktionsbehälter angeordnet ist.

20. Wiedergewinnungsverfahren zum Wiedergewinnen der wertvollen Substanz aus der Lithium-Sekundärbatterie nach Anspruch 18, wobei der Elektroabscheidungsschritt unter Verwendung eines Paars von Elektroden ausgeführt wird, die im Reaktionsbehälter angeordnet sind.

21. Wiedergewinnungsverfahren zum Wiedergewinnen der wertvollen Substanz aus der Lithium-Sekundärbatterie nach einem der Ansprüche 18 bis 20,
wobei das metallische Lithium, das auf der Kathode abgeschieden wird und dann zu einer Flüssigkeitsoberfläche des geschmolzenen Lithiumchloridsalzes aufschwimmt und sich auf dieser ansammelt, durch einen Abführdurchlass abgeführt wird, der eine Abführöffnung beinhaltet, die sich knapp oberhalb der Flüssigkeitsoberfläche des geschmolzenen Lithiumchloridsalzes befindet.

22. Wiedergewinnungsverfahren zum Wiedergewinnen der wertvollen Substanz aus der Lithium-Sekundärbatterie nach einem der Ansprüche 15 bis 21, das weiter einen Schritt eines Waschens mit Wasser umfasst, bei dem das perforierte Aufbereitungsgefäß in Wasser eingetaucht wird, um so ein Fremdmaterial zu entfernen, nachdem das perforierte Aufbereitungsgefäß aus dem geschmolzenen Lithiumchloridsalz im Reaktionsbehälter durch den Hochziehschritt hochgezogen wurde.

23. Wiedergewinnungsverfahren zum Wiedergewinnen der wertvollen Substanz aus der Lithium-Sekundärbatterie nach einem der Ansprüche 15 bis 22, das weiter einen Befüllungsschritt umfasst, bei dem das Elektrodenmaterial von pulverförmigem Zustand in den Gefäßhauptkörper eingefüllt und verdichtet wird, und zwar vor dem Eintauchschritt.

24. Wiedergewinnungsverfahren zum Wiedergewinnen der wertvollen Substanz aus der Lithium-Sekundärbatterie nach einem der Ansprüche 15 bis 23, wobei bei dem Reduktionsreaktionsschritt, sobald das metallische Lithium durch die Reduktionsreaktion mit dem Elektrodenmaterial verbraucht wird, das metallische Lithium, das auf einer Flüssigkeitsoberfläche des geschmolzenen Lithiumchloridsalzes schwimmt, welches im Reaktionsbehälter aufbewahrt wird, gelöst wird und dem geschmolzenen Lithiumchloridsalz zugeführt wird, so dass ein chemisches Gleichgewicht aufrechterhalten wird.

## Revendications

1. Appareil de récupération pour récupérer une substance précieuse à partir d'une batterie rechargeable au lithium, comprenant :
un réservoir de réaction adapté pour l'immersion d'un matériau d'électrode de la batterie rechargeable au lithium dans du sel fondu de chlorure de lithium contenant du lithium métallique de manière à réaliser une réaction par réduction du matériau d'électrode avec le lithium métallique ;
une cuve de traitement perforée mobile configurée pour contenir le matériau d'électrode et devant être immergée dans le sel fondu de chlorure de lithium dans le réservoir de réaction, ensemble avec le matériau d'électrode contenu dans celui-ci, la cuve de traitement perforée mobile comprenant un corps principal de cuve qui est fourré du matériau d'électrode, dans lequel une pluralité de trous traversants, adaptés chacun pour la communication entre un espace interne du réservoir de réaction dans lequel est stocké le sel fondu de chlorure de lithium et un espace interne du corps principal de cuve contenant le matériau d'électrode, sont formés dans une paroi de cuve formant le corps principal de cuve ; et
un moyen pour porter la cuve, adapté pour immerger la cuve de traitement perforée contenant le matériau d'électrode, dans le sel fondu de chlorure de lithium dans le réservoir de réaction et pour extraire la cuve de traitement perforée du sel fondu de chlorure de lithium dans le réservoir de réaction une fois qu'un processus a été effectué,
dans lequel le corps principal de cuve a une épaisseur de l'espace interne qui est fourré du matériau d'électrode, l'épaisseur étant fixée approximativement à deux fois ou moins de deux fois une distance sur laquelle le sel fondu de chlorure de lithium peut imprégner le matériau d'électrode fourrant le corps principal de cuve.

2. Appareil de récupération pour récupérer la substance précieuse à partir de la batterie rechargeable au lithium selon la revendication 1, dans lequel l'épaisseur de l'espace interne du corps principal de cuve est dans les limites d'une plage d'approximativement 60 mm ou moins.

3. Appareil de récupération pour récupérer la substance précieuse à partir de la batterie rechargeable au lithium selon la revendication 1 ou 2, dans lequel le corps principal de cuve est configuré pour avoir l'espace interne qui a une structure rectangulaire ayant une section transversale horizontale rectangulaire.

4. Appareil de récupération pour récupérer la substance précieuse à partir de la batterie rechargeable au lithium selon la revendication 1 ou 2, dans lequel le corps principal de cuve est configuré pour avoir l'espace interne qui a une structure semblable à un beignet ayant une section transversale horizontale annulaire.

5. Appareil de récupération pour récupérer la substance précieuse à partir de la batterie rechargeable au lithium selon l'une quelconque des revendications 1 à 4, dans lequel le trou traversant a un diamètre d'approximativement 1 mm.

6. Appareil de récupération pour récupérer la substance précieuse à partir de la batterie rechargeable au lithium selon l'une quelconque des revendications 1 à 5, comprenant par ailleurs un tube de guidage ayant un passage formé à l'intérieur de celui-ci, le passage étant utilisé lorsque la cuve de traitement perforée est immergée dans le sel fondu de chlorure de lithium dans le réservoir de réaction grâce au moyen pour porter la cuve, le tube de guidage ayant une extrémité inférieure située en dessous d'une surface du liquide du sel fondu de chlorure de lithium stocké dans le réservoir de réaction.

7. Appareil de récupération pour récupérer la substance précieuse à partir de la batterie rechargeable au lithium selon l'une quelconque des revendications 1 à 6, dans lequel la paroi de cuve du corps principal de cuve est formée par un matériau maillé ou un métal de poinçonnage.

8. Appareil de récupération pour récupérer la substance précieuse à partir de la batterie rechargeable au lithium selon l'une quelconque des revendications 1 à 7, comprenant par ailleurs un moyen de dépôt électrolytique pour l'électrolyse d'un oxyde de lithium produit dans le sel fondu de chlorure de lithium dans le réservoir de réaction de manière à déposer le lithium métallique sur une cathode.

9. Appareil de récupération pour récupérer la substance précieuse à partir de la batterie rechargeable au lithium selon la revendication 8, comprenant par ailleurs un réservoir de dépôt électrolytique de lithium disposé séparément du réservoir de réaction, le moyen de dépôt électrolytique étant situé dans le réservoir de dépôt électrolytique de lithium.

10. Appareil de récupération pour récupérer la substance précieuse à partir de la batterie rechargeable au lithium selon la revendication 9, comprenant par ailleurs un passage d'évacuation comprenant un orifice d'évacuation situé juste au-dessus d'une surface du liquide du sel fondu de chlorure de lithium afin de collecter le lithium métallique accumulé à la surface du liquide du sel fondu de chlorure de lithium dans le réservoir de dépôt électrolytique de lithium.

11. Appareil de récupération pour récupérer la substance précieuse à partir de la batterie rechargeable au lithium selon la revendication 8, dans lequel une anode et la cathode du moyen de dépôt électrolytique sont immergées dans le sel fondu de chlorure de lithium dans le réservoir de réaction.

12. Appareil de récupération pour récupérer la substance précieuse à partir de la batterie rechargeable au lithium selon la revendication 11, dans lequel un élément de séparation est disposé dans le réservoir de réaction, l'élément de séparation étant adapté pour protéger le lithium métallique flottant sur une surface du liquide du sel fondu de chlorure de lithium dans le réservoir de réaction par rapport à l'anode du moyen de dépôt électrolytique.

13. Appareil de récupération pour récupérer la substance précieuse à partir de la batterie rechargeable au lithium selon la revendication 12, comprenant par ailleurs un passage d'évacuation comprenant un orifice d'évacuation situé juste au-dessus de la surface du liquide du sel fondu de chlorure de lithium afin de collecter le lithium métallique accumulé sur la surface du liquide du sel fondu de chlorure de lithium dans le réservoir de réaction.

14. Appareil de récupération pour récupérer la substance précieuse à partir de la batterie rechargeable au lithium selon l'une quelconque des revendications 1 à 13, comprenant par ailleurs un réservoir d'eau configuré de manière à ce que la cuve de traitement perforée soit immergée dans l'eau afin de retirer un matériau étranger une fois que la cuve de traitement perforée a été extraite du sel fondu de chlorure de lithium dans le réservoir de réaction.

15. Procédé de récupération d'une substance précieuse à partir d'une batterie rechargeable au lithium, comprenant :
une étape d'immersion consistant à immerger une cuve de traitement perforée mobile, laquelle comprend un corps principal de cuve qui est fourré d'un matériau d'électrode de la batterie rechargeable au lithium, dans du sel fondu de chlorure de lithium qui est stocké dans un réservoir de réaction et qui contient du lithium métallique, dans lequel une pluralité de trous traversants, adaptés chacun pour la communication entre un espace interne du réservoir de réaction dans lequel est stocké le sel fondu de chlorure de lithium et un espace interne du corps principal de cuve contenant le matériau d'électrode, sont formés dans une paroi de cuve formant le corps principal de cuve ;
une étape de réaction par réduction consistant à réaliser une réaction par réduction du matériau d'électrode avec le lithium métallique dans le réservoir de réaction, dans lequel le sel fondu de chlorure de lithium, dans lequel sont dissous le lithium métallique en tant qu'agent réducteur et un oxyde de lithium en tant que produit de réaction, s'écoule à travers la pluralité de trous traversants du corps principal de cuve ; et
une étape d'extraction consistant à extraire la cuve de traitement perforée du sel fondu de chlorure de lithium dans le réservoir de réaction une fois que l'étape de réaction par réduction a été réalisée,
dans lequel le corps principal de cuve a une épaisseur de l'espace interne qui est fourré du matériau d'électrode, l'épaisseur étant fixée approximativement à deux fois ou moins de deux fois une distance sur laquelle le sel fondu de chlorure de lithium peut imprégner le matériau d'électrode fourrant le corps principal de cuve, et
dans lequel, au cours de l'étape de réaction par réduction, le sel fondu de chlorure de lithium peut imprégner sensiblement tout le matériau d'électrode dont le corps principal de cuve est fourré.

16. Procédé de récupération de la substance précieuse à partir de la batterie rechargeable au lithium selon la revendication 15, dans lequel, au cours de l'étape d'immersion et de l'étape d'extraction, la cuve de traitement perforée est immergée dans le sel fondu de chlorure de lithium dans le réservoir de réaction et en est extraite à travers l'intérieur d'un tube de guidage, le tube de guidage ayant une extrémité inférieure située en dessous d'une surface du liquide du sel fondu de chlorure de lithium stocké dans le réservoir de réaction.

17. Procédé de récupération de la substance précieuse à partir de la batterie rechargeable au lithium selon la revendication 16, comprenant par ailleurs une étape de préparation consistant à amener le sel fondu de chlorure de lithium et le lithium métallique à l'intérieur du réservoir de réaction avant l'étape d'immersion, dans lequel le sel fondu de chlorure de lithium est tout d'abord amené à l'intérieur du réservoir de réaction jusqu'à ce qu'une surface du liquide de celui-ci atteigne un niveau au-dessus de l'extrémité inférieure du tube de guidage, et le lithium métallique étant ensuite amené sur la surface du liquide du sel fondu de chlorure de lithium dans le réservoir de réaction à l'extérieur du tube de guidage.

18. Procédé de récupération de la substance précieuse à partir de la batterie rechargeable au lithium selon l'une quelconque des revendications 15 à 17, comprenant par ailleurs une étape de dépôt électrolytique d'électrolyse d'un oxyde de lithium produit dans le sel fondu de chlorure de lithium dans le réservoir de réaction au cours de l'étape de réaction par réduction de manière à déposer le lithium métallique sur une cathode.

19. Procédé de récupération de la substance précieuse à partir de la batterie rechargeable au lithium selon la revendication 18, dans lequel l'étape de dépôt électrolytique est réalisée en utilisant une paire d'électrodes situées dans un réservoir de dépôt électrolytique de lithium qui est disposé séparément du réservoir de réaction.

20. Procédé de récupération de la substance précieuse à partir de la batterie rechargeable au lithium selon la revendication 18, dans lequel l'étape de dépôt électrolytique est réalisée en utilisant une paire d'électrodes disposées dans le réservoir de réaction.

21. Procédé de récupération de la substance précieuse à partir de la batterie rechargeable au lithium selon l'une quelconque des revendications 18 à 20,
dans lequel le lithium métallique déposé sur la cathode et flottant ensuite vers une surface du liquide du sel fondu de chlorure de lithium et s'y accumulant est évacué à travers un passage d'évacuation comprenant un orifice d'évacuation situé juste au-dessus de la surface du liquide du sel fondu de chlorure de lithium.

22. Procédé de récupération de la substance précieuse à partir de la batterie rechargeable au lithium selon l'une quelconque des revendications 15 à 21, comprenant par ailleurs une étape de lavage à l'eau consistant à immerger la cuve de traitement perforée dans de l'eau de manière à enlever un matériau étranger une fois que la cuve de traitement perforée a été extraite du sel fondu de chlorure de lithium dans le réservoir de réaction grâce à l'étape d'extraction.

23. Procédé de récupération de la substance précieuse à partir de la batterie rechargeable au lithium selon l'une quelconque des revendications 15 à 22, comprenant par ailleurs une étape de remplissage consistant à fourrer le corps principal de cuve avec le matériau d'électrode d'un état pulvérulent et à le comprimer à l'intérieur de celui-ci avant l'étape d'immersion.

24. Procédé de récupération de la substance précieuse à partir de la batterie rechargeable au lithium selon l'une quelconque des revendications 15 à 23, dans lequel, au cours de l'étape de réaction par réduction, une fois que le lithium métallique est détruit par la réaction par réduction avec le matériau d'électrode, le lithium métallique flottant sur une surface du liquide du sel fondu de chlorure de lithium stocké dans le réservoir de réaction sera dissous et amené à l'intérieur du sel fondu de chlorure de lithium de manière à conserver un équilibre chimique.
